# EUROPEAN PATENT APPLICATION

(11) **EP 4 557 693 A1**
(43) Date of publication of application: **21.05.2025**
(21) Application number: 23854148.6
(22) Date of filing: 07.07.2023
(51) Int. Cl.: H04L 45/7453

(54) **DATA PROCESSING METHOD, APPARATUS AND SYSTEM**

(30) Priority: 15.08.2022 CN 202210974967
(71) Applicant: Huawei Technologies Co., Ltd., Shenzhen, Guangdong 518129 (CN)
(72) Inventor: LU, Shengwen, Shenzhen, Guangdong 518129 (CN)
(74) Representative: Maiwald GmbH
(86) International application number: PCT/CN2023/106243
(87) International publication number: WO 2024/037243

(57) **Abstract**

A data processing method, an apparatus, and a system are provided, to reduce a capacity and costs of storage resources occupied by a flow table. The data processing method includes: receiving a target packet, searching for a target flow entry in a hash table based on policy information, and processing the target packet based on the target flow entry. The policy information indicates a target operation corresponding to the target packet in a plurality of groups of operations, the target operation is for shielding a target field in a plurality of fields of the target packet, and the target flow entry matches first characteristic information of the target packet. Because the first characteristic information includes a plurality of fields for which the target operation is performed, the target field in the plurality of fields in the first characteristic information is shielded, target packets of a plurality of network flows with different target fields may have same first characteristic information, and the target flow entry in the hash table may be for matching packets of the plurality of network flows. This helps reduce a quantity of flow entries in the hash table and save storage resources.

## Description

This application claims priority to Chinese Patent Application No. 202210974967.4, filed with the China National Intellectual Property Administration on August 15, 2022 and entitled "DATA PROCESSING METHOD, APPARATUS, AND SYSTEM", which is incorporated herein by reference in its entirety.

### TECHNICAL FIELD

This application relates to the communication field, and in particular, to a data processing method, an apparatus, and a system.

### BACKGROUND

An intelligent network interface card is a network adapter that has an acceleration capability and can offload a processor function of a host. To improve network flow processing performance of the host (for example, a gateway), some functions of the host may be offloaded to the intelligent network interface card. For example, the host may deliver a flow table to the intelligent network interface card, and the intelligent network interface card stores the flow table. In this way, after a packet is received, the packet does not need to be forwarded to the host, but a flow entry is matched in the stored flow table, to implement high-speed processing on the packet.

Matching information of the flow entry indicates a condition that a packet in a network flow satisfies, and is for matching the packet. Flow entries may be classified into a fuzzy flow entry and an exact flow entry based on matching information of the flow entries. The fuzzy flow entry is for matching a plurality of network flows. Matching information of the fuzzy flow entry generally includes a wildcard, and the wildcard represents any field. A ternary content addressable memory (ternary content addressable memory, TCAM) supports data query with a wildcard. Therefore, the network interface card may store the fuzzy flow entry in the TCAM. However, because of high costs and high energy consumption, it is difficult to use the TCAM to store a large-scale flow table. The exact flow entry is for matching a single network flow. Therefore, matching information of the exact flow entry does not include a wildcard, and the network interface card may store the exact flow entry in a form of a hash table, to implement quick search. However, as a quantity of network flows increases, a quantity of exact flow entries that need to be stored in the hash table correspondingly increases, and a large quantity of storage resources are occupied.

### SUMMARY

A data processing method, an apparatus, and a system are provided, to reduce a capacity and costs of storage resources occupied by a flow table.

According to a first aspect, this application provides a data processing method, including: A first device receives a target packet; obtains a target flow entry for the target packet from a hash table based on policy information; and then processes the target packet based on the target flow entry. Optionally, the target packet is any packet in all packets received by the first device, or is any packet in some packets in all the packets. A quantity of the "some packets" is not limited. The policy information indicates a target operation corresponding to the target packet in a plurality of groups of operations, the target operation is for shielding a target field in a plurality of fields of the target packet, and the plurality of fields are for identifying a network flow to which the target packet belongs. The hash table stores one or more flow entries, a target flow entry in the one or more flow entries matches first characteristic information of the target packet (or is referred to as matching success), and the first characteristic information includes the plurality of fields for which the target operation is performed.

The target field in the plurality of fields in the first characteristic information is shielded. Therefore, target packets of a plurality of network flows with different target fields may have same first characteristic information. Correspondingly, the target flow entry in the hash table may be for matching packets of the plurality of network flows. This helps reduce a quantity of flow entries in the hash table and save storage resources. In addition, the first characteristic information is related to the target operation. Configuring the policy information helps change the target operation corresponding to the target packet in the plurality of groups of operations, and further change the target flow entry obtained by the first device for the target packet from the hash table, thereby controlling an action used for processing the target packet.

Optionally, the target flow entry includes at least matching information (or referred to as a match field) and instruction information (or referred to as an instruction field or an action field). That the target flow entry matches the first characteristic information of the target packet specifically means that matching information of the target flow entry successfully matches the first characteristic information. The processing the target packet based on the target flow entry specifically means that processing the target packet based on an action indicated by the instruction information of the target flow entry.

Optionally, the policy information includes one or more items, a target item in the one or more items includes target matching information and a target matching result, the target matching information is for matching the target packet, and the target matching result indicates the target operation. The target item indicates the target operation corresponding to the target packet. This helps reduce calculation complexity.

Optionally, the target matching information matches second characteristic information of the target packet, and the second characteristic information is determined based on the plurality of fields and/or time information of receiving the target packet. In other words, the second characteristic information for determining the target operation is not limited to the plurality of fields of the target packet, and may be related to the time information of the target packet, and the like. In this way, the first network device may obtain different target flow entries for a plurality of target packets that are of a same network flow and that are indirectly received at different time points or in different time zones, and perform processing based on different actions. This helps improve diversity and flexibility of a packet processing policy.

Optionally, the first characteristic information further includes an identifier of the target operation. In other words, the matching information of the target flow entry not only needs to match the plurality of fields for which the target operation is performed, but also needs to match the identifier of the target operation. This helps improve accuracy of a matching result.

Optionally, the matching information of the target flow entry indicates at least the identifier of the target operation and the plurality of fields for which the target operation is performed.

Optionally, the target matching result includes the identifier of the target operation, or the target matching result indicates a target index, and at least the identifier of the target operation is stored in a storage location to which the target index points.

Optionally, the hash table includes a plurality of hash sub-tables, and each hash sub-table is for storing a flow entry indicating a same operation.

Optionally, after determining the target operation based on the policy information, the first network device determines the first characteristic information of the target packet based on the target operation, and then determines storage space that is indicated in the hash table and that is of a hash value of the first characteristic information. If the storage space stores the flow entry, and the flow entry matches the first characteristic information, the flow entry is the target flow entry, and the first device obtains the target flow entry. It can be learned that the first device efficiently obtains the target flow entry for the target packet.

Optionally, before the first device obtains the target flow entry from the hash table based on the policy information, the method further includes: When the hash table does not include the target flow entry, the first device sends a first message to a second device, where the first message is for requesting the second device to deliver the target flow entry. Then, the first device receives a second message sent by the second device, where the second message carries the target flow entry. The first device stores the target flow entry in the hash table, for example, calculates a hash value of the matching information of the target flow entry, and stores the target flow entry in storage space indicated by the hash value in the hash table. Then, the first device may obtain the target flow entry from the hash table based on the policy information.

Optionally, a user may select, as required, at least one group of operations from the plurality of groups of operations as an operation corresponding to the target packet, and configure the policy information, so that the policy information indicates that the target packet corresponds to the at least one group of operations that is selected. Each of the at least one group of operations is referred to as the target operation. The first device may obtain the target flow entry based on each group of target operations, and then process the target packet based on all or some of the obtained target flow entries.

Optionally, the target operation is for setting the target field in the plurality of fields of the first characteristic information to a target value. In other words, a value of the target field in the plurality of fields for which the target operation is performed is set to a target value. The target value may be a fixed value, for example, "0" or "1". When the target field includes a plurality of bits, that the value of the target field is set to a target value may mean that each bit of the target field is set to the fixed value.

Optionally, the target operation is for deleting the target field from the plurality of fields of the first characteristic information. In other words, the plurality of fields for which the target operation is performed do not include the target field. This helps reduce a length of the first characteristic information, thereby reducing a length of characters that need to be compared in a table lookup process, and improving table lookup efficiency.

According to a second aspect, a data processing method is provided, including: A second device sends policy information to a first device, where the policy information indicates the first device to search for a target flow entry in a hash table after the first device receives a target packet, the hash table stores one or more flow entries, the target flow entry matches first characteristic information of the target packet, the first characteristic information includes a plurality of fields for which a target operation is performed, the plurality of fields are for identifying a network flow to which the target packet belongs, the target operation is an operation that corresponds to the target packet in a plurality of groups of operations and that is indicated by the policy information, and the target operation is for shielding a target field in the plurality of fields of the target packet.

Adjusting the policy information sent by the second device helps change the target operation corresponding to the target packet in the plurality of groups of operations, and further change the target flow entry obtained by the first device for the target packet from the hash table, thereby controlling an action used by the first device to process the target packet.

Optionally, the target flow entry includes at least matching information (or referred to as a match field) and instruction information (or referred to as an instruction field or an action field). That the target flow entry matches the first characteristic information of the target packet specifically means that matching information of the target flow entry successfully matches the first characteristic information. The processing the target packet based on the target flow entry specifically means that processing the target packet based on an action indicated by the instruction information of the target flow entry.

Optionally, the policy information includes one or more items, a target item in the one or more items includes target matching information and a target matching result, the target matching information is for matching the target packet, and the target matching result indicates the target operation. The target item indicates the target operation corresponding to the target packet. This helps reduce calculation complexity.

Optionally, the target matching information matches second characteristic information of the target packet, and the second characteristic information is determined based on the plurality of fields and/or time information of receiving the target packet. In other words, the second characteristic information for determining the target operation is not limited to the plurality of fields of the target packet, and may be related to the time information of the target packet, and the like. In this way, the first network device may obtain different target flow entries for a plurality of target packets that are of a same network flow and that are indirectly received at different time points or in different time zones, and perform processing based on different actions. This helps improve diversity and flexibility of a packet processing policy.

Optionally, a user may select, as required, at least one group of operations from the plurality of groups of operations as an operation corresponding to the target packet, and configure the policy information, so that the policy information indicates that the target packet corresponds to the at least one group of operations that is selected.

Optionally, the target operation is for setting the target field in the plurality of fields of the first characteristic information to a target value. In other words, a value of the target field in the plurality of fields for which the target operation is performed is set to a target value. The target value may be a fixed value, for example, "0" or "1". When the target field includes a plurality of bits, that the value of the target field is set to a target value may mean that each bit of the target field is set to the fixed value.

Optionally, the target operation is for deleting the target field from the plurality of fields of the first characteristic information. In other words, the plurality of fields for which the target operation is performed do not include the target field. This helps reduce a length of the first characteristic information, thereby reducing a length of characters that need to be compared in a table lookup process, and improving table lookup efficiency.

Optionally, the second device receives a first message sent by the first device, where the first message is for requesting to deliver the target flow entry, the target flow entry matches the first characteristic information of the target packet, the first characteristic information includes the plurality of fields for which the target operation is performed, the plurality of fields are for identifying a network flow to which the target packet belongs, the target operation is for shielding the target field in the plurality of fields, and the target operation is an operation that corresponds to the target packet in the plurality of groups of operations and that is indicated by the policy information. The second device sends a second message to the first device, where the second message carries the target flow entry.

According to a third aspect, a data processing method is provided, including: A second device sends policy information to a first device, where the policy information indicates a target operation corresponding to a target packet in a plurality of groups of operations, the target operation is for shielding a target field in a plurality of fields of the target packet, and the plurality of fields are for identifying a network flow to which the target packet belongs; after receiving the target packet, the first device searches for a target flow entry in a hash table based on the policy information, where the hash table stores one or more flow entries, the target flow entry matches first characteristic information of the target packet, and the first characteristic information includes the plurality of fields for which the target operation is performed; and the first device processes the target packet based on the target flow entry.

Optionally, the data processing method provided in the third aspect is a method jointly implemented by the first device performing the method in the first aspect and the second device performing the method in the second aspect. For another optional manner of the third aspect, refer to the optional manner provided in the first aspect or the second aspect for understanding. Details are not described herein again.

According to a fourth aspect, a packet processing apparatus is provided, including a receiving module, an obtaining module, and a processing module. The receiving module is configured to receive a target packet. The obtaining module is configured to obtain a target flow entry from a hash table based on policy information, where the policy information indicates a target operation corresponding to the target packet in a plurality of groups of operations, the target operation is for shielding a target field in a plurality of fields of the target packet, the plurality of fields are for identifying a network flow to which the target packet belongs, the hash table stores one or more flow entries, the target flow entry matches first characteristic information of the target packet, and the first characteristic information includes the plurality of fields for which the target operation is performed. The processing module is configured to process the target packet based on the target flow entry.

The target field in the plurality of fields in the first characteristic information is shielded. Therefore, target packets of a plurality of network flows with different target fields may have same first characteristic information. Correspondingly, the target flow entry in the hash table may be for matching packets of the plurality of network flows. This helps reduce a quantity of flow entries in the hash table and save storage resources. In addition, the first characteristic information is related to the target operation. Configuring the policy information helps change the target operation corresponding to the target packet in the plurality of groups of operations, and further change the target flow entry obtained by the first device for the target packet from the hash table, thereby controlling an action used for processing the target packet.

Optionally, the target flow entry includes at least matching information (or referred to as a match field) and instruction information (or referred to as an instruction field or an action field). That the target flow entry matches the first characteristic information of the target packet specifically means that matching information of the target flow entry successfully matches the first characteristic information. The processing the target packet based on the target flow entry specifically means that processing the target packet based on an action indicated by the instruction information of the target flow entry.

Optionally, the policy information includes one or more items, a target item in the one or more items includes target matching information and a target matching result, the target matching information is for matching the target packet, and the target matching result indicates the target operation. The target item indicates the target operation corresponding to the target packet. This helps reduce calculation complexity.

Optionally, the target matching information matches second characteristic information of the target packet, and the second characteristic information is determined based on the plurality of fields and/or time information of receiving the target packet. In other words, the second characteristic information for determining the target operation is not limited to the plurality of fields of the target packet, and may be related to the time information of the target packet, and the like. In this way, the first network device may obtain different target flow entries for a plurality of target packets that are of a same network flow and that are indirectly received at different time points or in different time zones, and perform processing based on different actions. This helps improve diversity and flexibility of a packet processing policy.

Optionally, the first characteristic information further includes an identifier of the target operation. In other words, the matching information of the target flow entry not only needs to match the plurality of fields for which the target operation is performed, but also needs to match the identifier of the target operation. This helps improve accuracy of a matching result.

Optionally, the matching information of the target flow entry indicates at least the identifier of the target operation and the plurality of fields for which the target operation is performed.

Optionally, the target matching result includes the identifier of the target operation, or the target matching result indicates a target index, and at least the identifier of the target operation is stored in a storage location to which the target index points.

Optionally, the hash table includes a plurality of hash sub-tables, and each hash sub-table is for storing a flow entry indicating a same operation.

Optionally, after determining the target operation based on the policy information, the obtaining module determines the first characteristic information of the target packet based on the target operation, and then determines storage space that is indicated in the hash table and that is of a hash value of the first characteristic information. If the storage space stores the flow entry, and the flow entry matches the first characteristic information, the flow entry is the target flow entry, and the first device obtains the target flow entry. It can be learned that the first device efficiently obtains the target flow entry for the target packet.

Optionally, the packet processing apparatus further includes a sending module, and the sending module is configured to send, when the hash table does not include the target flow entry, a first message to a second device, where the first message is for requesting the second device to deliver the target flow entry. The receiving module is further configured to receive a second message sent by the second device, where the second message carries the target flow entry. The receiving module is further configured to store the target flow entry in the hash table, for example, calculate a hash value of matching information of the target flow entry, and store the target flow entry in storage space indicated by the hash value in the hash table. Then, the obtaining module may obtain the target flow entry from the hash table based on the policy information.

Optionally, a user may select, as required, at least one group of operations from the plurality of groups of operations as an operation corresponding to the target packet, and configure the policy information, so that the policy information indicates that the target packet corresponds to the at least one group of operations that is selected. Each of the at least one group of operations is referred to as the target operation. The obtaining module may obtain the target flow entry based on each group of target operations, and then the processing module processes the target packet based on all or some of the obtained target flow entries.

Optionally, the target operation is for setting the target field in the plurality of fields of the first characteristic information to a target value. In other words, a value of the target field in the plurality of fields for which the target operation is performed is set to a target value. The target value may be a fixed value, for example, "0" or "1". When the target field includes a plurality of bits, that the value of the target field is set to a target value may mean that each bit of the target field is set to the fixed value.

Optionally, the target operation is for deleting the target field from the plurality of fields of the first characteristic information. In other words, the plurality of fields for which the target operation is performed do not include the target field. This helps reduce a length of the first characteristic information, thereby reducing a length of characters that need to be compared in a table lookup process, and improving table lookup efficiency.

According to a fifth aspect, a data processing apparatus is provided, including: a sending module, configured to send policy information to a first device, where the policy information indicates the first device to search for a target flow entry in a hash table after the first device receives a target packet, the hash table stores one or more flow entries, the target flow entry matches first characteristic information of the target packet, the first characteristic information includes a plurality of fields for which a target operation is performed, the plurality of fields are for identifying a network flow to which the target packet belongs, the target operation is an operation that corresponds to the target packet in a plurality of groups of operations and that is indicated by the policy information, and the target operation is for shielding a target field in the plurality of fields of the target packet.

Adjusting the policy information sent by the sending module helps change the target operation corresponding to the target packet in the plurality of groups of operations, and further change the target flow entry obtained by the first device for the target packet from the hash table, thereby controlling an action used by the first device to process the target packet.

Optionally, the target flow entry includes at least matching information (or referred to as a match field) and instruction information (or referred to as an instruction field or an action field). That the target flow entry matches the first characteristic information of the target packet specifically means that matching information of the target flow entry successfully matches the first characteristic information. The processing the target packet based on the target flow entry specifically means that processing the target packet based on an action indicated by the instruction information of the target flow entry.

Optionally, the policy information includes one or more items, a target item in the one or more items includes target matching information and a target matching result, the target matching information is for matching the target packet, and the target matching result indicates the target operation. The target item indicates the target operation corresponding to the target packet. This helps reduce calculation complexity.

Optionally, the target matching information matches second characteristic information of the target packet, and the second characteristic information is determined based on the plurality of fields and/or time information of receiving the target packet. In other words, the second characteristic information for determining the target operation is not limited to the plurality of fields of the target packet, and may be related to the time information of the target packet, and the like. In this way, the first network device may obtain different target flow entries for a plurality of target packets that are of a same network flow and that are indirectly received at different time points or in different time zones, and perform processing based on different actions. This helps improve diversity and flexibility of a packet processing policy.

Optionally, a user may select, as required, at least one group of operations from the plurality of groups of operations as an operation corresponding to the target packet, and configure the policy information, so that the policy information indicates that the target packet corresponds to the at least one group of operations that is selected.

Optionally, the target operation is for setting the target field in the plurality of fields of the first characteristic information to a target value. In other words, a value of the target field in the plurality of fields for which the target operation is performed is set to a target value. The target value may be a fixed value, for example, "0" or "1". When the target field includes a plurality of bits, that the value of the target field is set to a target value may mean that each bit of the target field is set to the fixed value.

Optionally, the target operation is for deleting the target field from the plurality of fields of the first characteristic information. In other words, the plurality of fields for which the target operation is performed do not include the target field. This helps reduce a length of the first characteristic information, thereby reducing a length of characters that need to be compared in a table lookup process, and improving table lookup efficiency.

Optionally, the data processing apparatus further includes a receiving module, configured to receive a first message sent by a first device, where the first message is for requesting to deliver the target flow entry. The second device sends a second message to the first device, where the second message carries the target flow entry.

According to a sixth aspect, a system is provided, including a communication link, the packet processing apparatus according to any one of the fourth aspect or the possible implementations of the fourth aspect, and the data processing apparatus according to any one of the fifth aspect or the possible implementations of the fifth aspect. The communication link is for transmitting information between the packet processing apparatus and the data processing apparatus. The communication link may be correspondingly set based on types of the packet processing apparatus and the data processing apparatus. For example, when the packet processing apparatus and the data processing apparatus are disposed in a same computer device, the communication link may be a bus. When the packet processing apparatus and the data processing apparatus are disposed in different computer devices, the communication link may include one or more network devices.

According to a seventh aspect, a computer device is provided, including a processor and a memory, where the processor is configured to execute instructions stored in the memory, to enable the computing device to perform the method according to any one of the first aspect or the possible implementations of the first aspect or the method according to any one of the second aspect or the possible implementations of the second aspect.

According to an eighth aspect, a computer-readable storage medium is provided, including instructions. When the instructions are run on a computer device, the computer device is enabled to perform the method according to any one of the first aspect or the possible implementations of the first aspect or the method according to any one of the second aspect or the possible implementations of the second aspect.

According to a ninth aspect, a chip is provided, including one or more processors. Some or all of the processors are configured to read and execute a computer program stored in a memory, to perform the method according to any one of the first aspect or the possible implementations of the first aspect or the method according to any one of the second aspect or the possible implementations of the second aspect.

According to a tenth aspect, a computer program product is provided. When the computer program product runs on a computer, the computing device is enabled to perform the method according to any one of the first aspect or the possible implementations of the first aspect or the method according to any one of the second aspect or the possible implementations of the second aspect.

### BRIEF DESCRIPTION OF DRAWINGS

FIG. 1 schematically shows a possible system architecture;
FIG. 2 schematically shows another possible system architecture;
FIG. 3-1 and FIG. 3-2 schematically show processes of matching a packet with a flow entry;
FIG. 4 schematically shows a possible procedure of a method according to this application;
FIG. 5-1 and FIG. 5-2 schematically show processes of matching a packet with a flow entry;
FIG. 6 schematically shows a possible structure of a packet processing apparatus;
FIG. 7 schematically shows a possible structure of a data processing apparatus; and
FIG. 8 schematically shows a possible structure of a computer device.

### DESCRIPTION OF EMBODIMENTS

A data processing method is provided. The following first describes a system architecture to which the method is applicable.

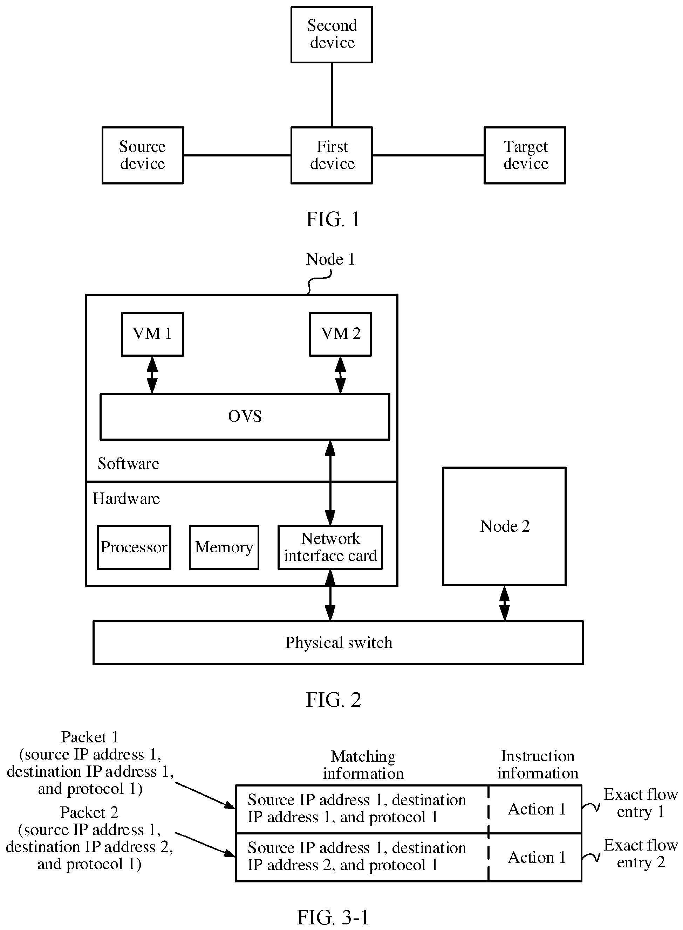

FIG. 1 schematically shows a possible structure of the system architecture. Refer to FIG. 1. The system architecture may include a source device, a target device, a first device, and a second device. The first device may separately establish a network connection to the second device, the source device, and the target device through a communication link.

The source device may generate data, encapsulate the data into a packet, and send the packet to the first device through a network connection to the first device. A specific type of the source device is not limited in this application. Optionally, the source device is a data collection device (for example, a sensor), a storage device (for example, a storage server), or a computing device (for example, a host, a server, or a personal computer). A running environment of the source device is not limited in this application. For example, the source device may run, but is not limited to running, in a cloud environment, an edge environment, or a terminal environment. The source device may be a physical device or a virtual device.

The second device may generate policy information or receive policy information from another device, and deliver the policy information to the first device. Optionally, the second device may further generate a flow table or receive a flow table from another device, and deliver the flow table to the first device. A specific type of the second device is not limited in this application. Optionally, the second device may be a computing device (for example, a host, a server, or a terminal) or a network device (for example, a router, a switch, or a network interface card). A running environment of the second device is not limited in this application. For example, the second device may run, but is not limited to running, in a cloud environment, an edge environment, or a terminal environment. The second device may be a physical device or a virtual device.

The first device may receive and store the policy information. The first device may obtain a target flow entry for a received target packet from a hash table based on the policy information, and process the target packet based on the target flow entry. The hash table stores one or more flow entries. Optionally, the one or more flow entries may be delivered by the second device. A specific type of the source device is not limited in this application. Optionally, the first device may be a computing device (for example, a host, a server, or a terminal) or a network device (for example, a router, a switch, or a network interface card). A running environment of the first device is not limited in this application. For example, the first device may run, but is not limited to running, in a cloud environment, an edge environment, or a terminal environment. The first device may be a physical device or a virtual device.

Content and functions of the policy information and the flow table are described below, and are not described herein.

The target device may receive a packet forwarded by the first device, and obtain data carried in the packet. A specific type of the target device is not limited in this application. Optionally, the target device is a computing device (for example, a host, a server, or a terminal) or a storage device (for example, a storage server). A running environment of the target device is not limited in this application. For example, the target device may run, but is not limited to running, in a cloud environment, an edge environment, or a terminal environment. The target device may be a physical device or a virtual device.

The source device is not limited to only sending a packet, and the target device is not limited to only receiving a packet. In some examples, the source device may alternatively receive a packet, and the target device may alternatively send a packet.

In some examples, the system architecture corresponding to FIG. 1 may not include the second device shown in FIG. 1, and the first device generates and stores policy information and/or one or more flow entries.

In some examples, the system architecture corresponding to FIG. 1 may further include another device other than the devices shown in FIG. 1. For example, one or more forwarding devices are included between the source device and the first device. For example, one or more forwarding devices are included between the target device and the first device. For example, the system architecture includes more source devices and/or target devices that establish network connections to the first device.

Different devices in the system architecture shown in FIG. 1 may be disposed in different physical devices, or at least two devices in the system architecture shown in FIG. 1 may be disposed in a same physical device.

FIG. 2 schematically shows another system architecture applied to a method in this application. Refer to FIG. 2. The system includes a first node and a second node that establish a communication connection. Optionally, the first node and the second node communicate with each other through a physical switch shown in FIG. 2. Refer to FIG. 2. The first node includes but is not limited to a processor, a memory, and a network interface card, and an open virtual switch (open virtual switch, OVS) and a virtual instance run on the processor. The virtual instance may include at least one of a virtual machine (virtual machine, VM), a container, and a bare metal server. In FIG. 2, an example in which a VM 1 and a VM 2 run on the first node is used. Optionally, the VM 1 and the VM 2 communicate with the second node through the OVS and the network interface card. Alternatively, the OVS may offload some or all forwarding functions to the network interface card, and the VM 1 and the VM 2 communicate with the second node through the network interface card, without forwarding through the OVS.

A structure of the second node is not limited. Optionally, similar to the first node, the second node includes a processor, a memory, and a network interface card, and an open virtual switch (open virtual switch, OVS) and a virtual instance run on the processor.

Optionally, the system architecture corresponding to FIG. 2 further includes more or fewer devices. For example, the system architecture corresponding to FIG. 2 further includes a controller. The controller is configured to generate policy information and/or one or more flow entries. The controller may communicate with the OVS and/or the network interface card, and deliver the policy information and/or the one or more flow entries to the OVS and/or the network interface card. Optionally, the controller is a physical device, or the controller is a virtual device. The virtual device may be deployed on the first node, the second node, or another node other than the first node and the second node.

In some examples, the system architecture corresponding to FIG. 2 is a specific form of the system architecture shown in FIG. 1. For example, the network interface card shown in FIG. 2 may correspond to the first device shown in FIG. 1, and the OVS shown in FIG. 2 or the controller mentioned above may correspond to the second device shown in FIG. 1. Alternatively, for example, the OVS shown in FIG. 2 may correspond to the first device shown in FIG. 1, and the controller mentioned above may correspond to the second device shown in FIG. 1. The node 2 shown in FIG. 2 may correspond to the source device or the target device shown in FIG. 1, and the VM 1 or the VM 2 shown in FIG. 2 may correspond to the target device or the source device shown in FIG. 1.

The following describes a flow entry. The flow entry includes but is not limited to matching information and instruction information. The matching information is for matching first characteristic information of a packet. For example, the matching information indicates a value of each field in the matched first characteristic information of the packet. Optionally, that the first characteristic information of the packet successfully matches the matching information may mean that a value of each field in the first characteristic information is the same as a value of a corresponding field in the matching information. In some examples, the matching information is also referred to as a match field (match field). The instruction information indicates zero, one, or more actions (actions) to be performed on the matched packet. In some examples, the instruction information is also referred to as an instruction field, an instruction set, or an action field.

The following describes the first characteristic information. The first characteristic information of the packet includes at least a plurality of fields for identifying a network flow to which the packet belongs. Optionally, at least one of the plurality of fields is from a header or a payload (payload) of the packet. A user may define the plurality of fields as required. Optionally, the plurality of fields for defining the network flow to which the packet belongs include a field for describing at least one of the following information types: a source IP address, a destination IP address, a source port number, a network layer protocol type, an IP service type, an interface number of a router/switch, time of receiving a packet, and the like. In the following, it is assumed that a plurality of fields of a packet include three fields, and the three fields are respectively for describing a source IP address, a source port, and a transport layer protocol (a triplet for short).

Based on a type of matching information in a flow entry, current flow entries generally include an exact flow entry and a fuzzy flow entry. Matching information of the exact flow entry is for matching a plurality of fields of a packet, and a value of each field indicated by the matching information is a determined value. FIG. 3-1 shows a process of matching a packet with an exact flow entry. Refer to FIG. 3-1. First characteristic information of a packet 1 and a packet 2 is shown in content in "()". Because the first characteristic information of the packet 1 successfully matches matching information of an exact flow entry 1, and the characteristic information of the packet 2 successfully matches matching information of an exact flow entry 2, the packet 1 and the packet 2 successfully match the exact flow entry 1 and the exact flow entry 2 respectively. It can be learned that a single exact flow entry can be for matching a packet in only one network flow.

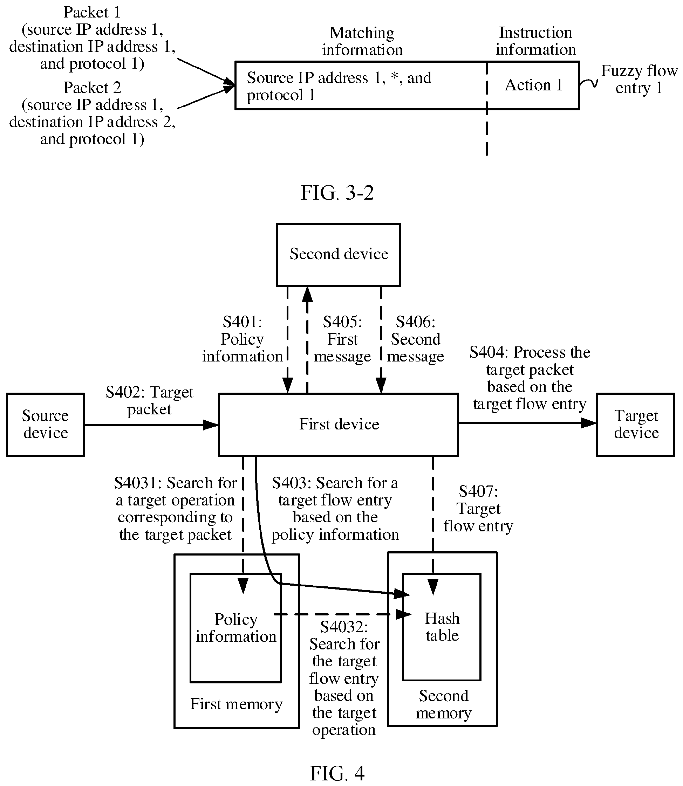

Values of some fields indicated by matching information of a fuzzy flow entry are wildcards, where the wildcard represents any value. FIG. 3-2 shows a process of matching a packet with a fuzzy flow entry. Refer to FIG. 3-2. First characteristic information of a packet 1 and a packet 2 is shown in content in "()", and "*" represents a wildcard in the fuzzy flow entry. Because the first characteristic information of the packet 1 successfully matches matching information of a fuzzy flow entry 1, and the characteristic information of the packet 2 successfully matches the matching information of the fuzzy flow entry 1, the packet 1 and the packet 2 match the fuzzy flow entry 1. It can be learned that a single fuzzy flow entry may be for matching packets in a plurality of network flows.

In some examples, a first device uses matching information of a flow entry as a keyword, and stores the flow entry in a hash table. This helps efficiently find, in a large-capacity storage medium, a flow entry that matches a packet. However, this requires that a value of each field in matching information of the flow entry be a determined value, and the first device can only store an exact flow entry in the hash table. As a quantity of network flows that need to be forwarded by the first device increases and a quantity of fields in first characteristic information of a packet increases, a quantity of exact flow entries that need to be stored in the hash table continuously increases, and a large quantity of storage resources are occupied.

In some examples, the first device stores a flow table in a ternary content addressable memory (ternary content addressable memory, TCAM). Because the TCAM supports searching with a wildcard, in a flow entry generated according to a fuzzy rule, a value of a fuzzy field may be set to a wildcard, to reduce a quantity of flow entries in the flow table. However, the TCAM is expensive and consumes a large amount of power.

To reduce a size and costs of a storage resource occupied by a flow entry, this application provides a data processing method, to reduce a size and costs of a storage resource occupied by a flow entry while efficiently processing a packet based on the flow entry.

FIG. 4 schematically shows a possible procedure of the data processing method. Refer to FIG. 4. The data processing method includes steps S401 to S405.

S401: A second device sends policy information to a first device.

Optionally, the first device and the second device in the method corresponding to FIG. 4 are respectively the first device and the second device shown in FIG. 1. Based on the foregoing descriptions of the first device and the second device, in some examples, the first device is the network interface card shown in FIG. 2, and the second device is the OVS shown in FIG. 2 or the controller (not shown in FIG. 2). Alternatively, in some examples, the first device is the OVS shown in FIG. 2, and the second device is the controller (not shown in FIG. 2).

After generating or receiving the policy information, the second device may send the policy information to the first device. After receiving the policy information, the first device may store the policy information in a first memory. A type of the first memory is not limited. Optionally, the first memory may be a cache or a TCAM. A specific occasion at which the second device sends the policy information to the first device is not limited. Optionally, after receiving a message that is sent by the first device and that is for requesting to deliver the policy information, the second device delivers the policy information. Alternatively, optionally, the second device actively sends the policy information to the first device.

The policy information indicates a target operation corresponding to a target packet in a plurality of groups of operations (or referred to as an operation set), to indicate the first device to obtain a target flow entry from a hash table based on the target operation after the first device receives the target packet.

Optionally, the target packet is any packet in all packets received by the first device, or is any packet in some packets in all the packets. A quantity of the "some packets" is not limited. The target operation is for shielding a target field in a plurality of fields of the target packet, and the plurality of fields are for identifying a network flow to which the target packet belongs. The target field may include one or more fields. The hash table stores one or more flow entries. The target flow entry is a flow entry that successfully matches first characteristic information of the target packet in the hash table.

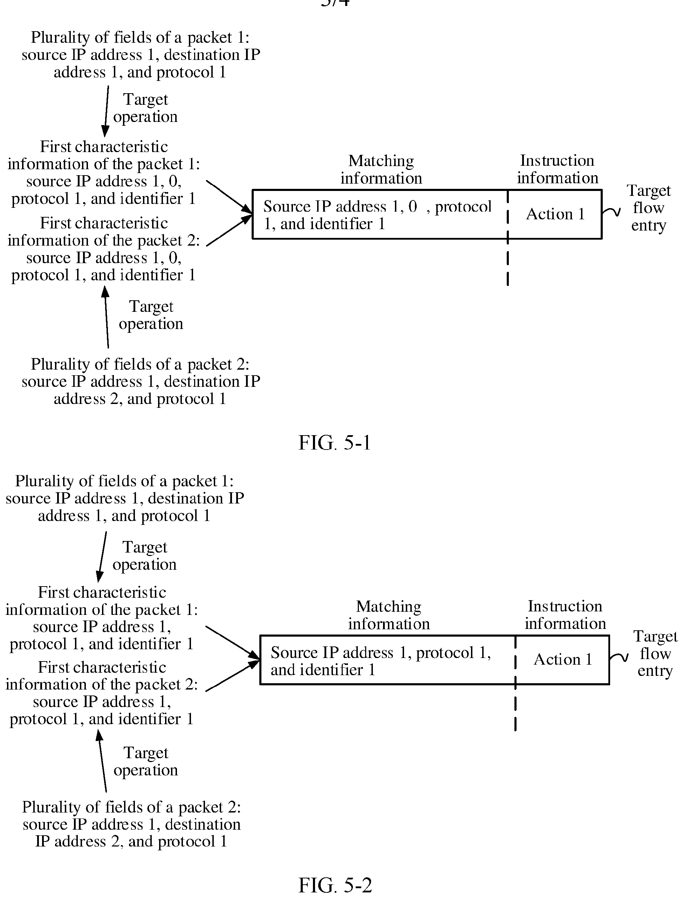

The first characteristic information that is mentioned above and that is for matching the exact flow entry or the fuzzy flow entry includes a plurality of fields of a packet. Different from the first characteristic information mentioned above, in the method embodiment corresponding to FIG. 4, the first characteristic information includes a plurality of fields for which the target operation is performed. Because the target field in the plurality of fields in the first characteristic information is shielded, target packets of a plurality of network flows with different target fields may have same first characteristic information (for example, refer to FIG. 5-1 and FIG. 5-2). Correspondingly, the target flow entry in the hash table may be for matching packets of the plurality of network flows. This helps reduce a quantity of flow entries in the hash table and save storage resources.

Optionally, each of the one or more flow entries is a wildcard flow entry, and the one or more flow entries are some or all flow entries in the hash table. Matching information of the wildcard flow entry is for matching first characteristic information for which a group of operations are performed. The group of operations refers to any group of operations in the plurality of groups of operations described above. Optionally, the matching information of the wildcard flow entry indicates the first characteristic information for which the group of operations are performed. Optionally, the matching information of the wildcard flow entry indicates an identifier of the group of operations, and correspondingly, the first characteristic information further includes an identifier of a group of operations in the plurality of groups of operations.

The "operation" herein may be information indicating an operation (or referred to as operation information), and the first characteristic information for which an operation is performed may be information obtained by performing an operation indicated by the operation information on the first characteristic information.

Optionally, each of the plurality of groups of operations is for shielding at least one of the plurality of fields. Optionally, fields shielded by different operations may be different. For example, a first operation in the plurality of groups of operations is for shielding a source IP address in a triplet, and a second operation in the plurality of groups of operations is for shielding a destination IP address in the triplet.

Optionally, a single group of operations in the plurality of groups of operations may include one or more operations, and a type of each operation is not limited.

The target operation is used as an example. Optionally, the target operation is for setting a value of the target field in the plurality of fields in the first characteristic information to a fixed target value. A specific value of the target value is not limited. For example, the target value may be "0" or "1". Optionally, the target value is a value of a target field indicated by matching information of the target flow entry. In some examples, the target operation corresponds to a mask (referred to as a target mask). Optionally, a quantity of bytes of the target mask is the same as a quantity of bytes of the plurality of fields, a value of each byte that is in the target mask and that corresponds to the target field is 0, and a value of another byte is 1. Performing the target operation on the plurality of fields may include: performing a bitwise AND operation on the plurality of fields and the target mask.

It is assumed that the plurality of fields respectively indicate a source IP address, a destination IP address, and a protocol of a packet, the target operation is for shielding a field corresponding to the destination IP address, and an identifier of the target mask is an identifier 1. FIG. 5-1 schematically shows a process of matching a target packet with a target flow entry. It is assumed that the first device receives a packet 1 and a packet 2, and the first device determines, based on the policy information, that the packet 1 and the packet 2 correspond to the target operation. A plurality of fields and first characteristic information of the packet 1, a plurality of fields and first characteristic information of the packet 2, and the target flow entry are shown in FIG. 5-1. Refer to FIG. 5-1. Although the plurality of fields of the packet 1 are different from those of the packet 2, the plurality of fields of the packet 1 are the same as those of the packet 2 after the target operation (that is, a bitwise AND operation with the target mask) is performed. Therefore, the first characteristic information of the packet 1 and the packet 2 is the same, and successfully matches the matching information in the target flow entry.

Alternatively, optionally, the target operation is for deleting the target field from the plurality of fields of the packet. This helps reduce a quantity of to-be-matched bytes and improve matching efficiency. It is assumed that the plurality of fields respectively indicate a source IP address, a destination IP address, and a protocol of a packet, the target field is a field corresponding to the destination IP address, and an identifier of the target operation is an identifier 1. FIG. 5-2 schematically shows a process of matching a target packet with a target flow entry. A plurality of fields and first characteristic information of a packet 1, a plurality of fields and first characteristic information of a packet 2, and the target flow entry are shown in FIG. 5-2. Refer to FIG. 5-2. Although the plurality of fields of the packet 1 are different from those of the packet 2, the plurality of fields of the packet 1 are the same as those of the packet 2 after the target operation (that is, deleting destination IP addresses of the packet 1 and the packet 2) is performed. Therefore, the first characteristic information of the packet 1 and the packet 2 is the same, and successfully matches the matching information in the target flow entry.

In some examples, one or more flow entries in the hash table are delivered by the second device. Optionally, the one or more flow entries are some or all of flow entries generated or received by the second device. A specific occasion at which the second device sends a flow table to a data processing apparatus is not limited. Optionally, after receiving a message that is sent by the first device and that is for requesting to deliver a flow table, the second device delivers the corresponding flow table. Alternatively, optionally, the second device actively sends the flow table to the data processing apparatus.

Step S401 is an optional step. In some examples, the first device does not receive the one or more flow entries from the second device, and the one or more flow entries stored in the first device are generated by the first device.

Refer to FIG. 4. The first device may organize the hash table in a second memory. A type of the second memory is not limited. Optionally, the second memory may be a memory of another type such as a static random access memory (Static Random Access Memory, SRAM) or a dynamic random access memory (Dynamic Random Access Memory, DRAM).

Optionally, the second memory is the first memory, and the first device stores the policy information and the hash table in the first memory. Optionally, the second memory and the first memory are different memories.

Optionally, the first device may determine a storage location of a corresponding flow entry in the hash table based on some fields (referred to as keywords) in each flow entry. Optionally, a keyword of each flow entry includes matching information in the corresponding flow entry.

For example, the first device stores the target flow entry in the hash table. In some examples, the first device obtains a keyword (for example, matching information) of the target flow entry, calculates a hash value of the keyword by using a hash function, and stores the target flow entry in a storage location corresponding to the hash value in the hash table. Because hash values corresponding to different keywords are generally different, different flow entries can be stored in different storage locations.

The hash table may be one hash table, or in some examples, the hash table includes a plurality of hash tables (referred to as hash sub-tables). Optionally, each hash sub-table is for storing a flow entry corresponding to a same operation. It is assumed that an operation set includes n groups of operations, which are respectively referred to as an operation 1, ..., an operation i, ..., and an operation n, where n is a positive integer, and i is any positive integer less than or equal to n. Optionally, the hash table includes a hash sub-table 1, ..., a hash sub-table i, ..., and a hash sub-table n, and any flow entry in the hash sub-table i corresponds to the operation i.

Alternatively, optionally, the hash table includes a hash sub-table 1, ..., a hash sub-table j, ..., and a hash sub-table m, where m is a positive integer less than or equal to n, j is any positive integer less than or equal to m, and lengths of matching information in any two flow entries in the hash sub-table j are the same. If the operation set includes a delete operation, lengths of matching information of different flow entries may be different. Flow entries whose matching information has a same length are stored in a same hash sub-table. This helps design a size of each storage location in the hash table based on the length of the matching information, and reduce a redundant waste of storage space in the hash table. In addition, reducing a quantity of hash sub-tables helps reduce table lookup complexity, and improve utilization of a storage location in the hash table.

S402: The first device receives the target packet.

The first device may receive the target packet. Optionally, the target packet is any packet in all packets received by the first device, or is any packet in some packets in all the packets. A quantity of the "some packets" is not limited.

Refer to FIG. 4. The first device receives the target packet from a source device. Optionally, the source device may be the source device shown in FIG. 1. According to the foregoing descriptions of the source device, in some examples, the source device is the second node shown in FIG. 2 or the virtual instance (for example, the VM 1 or the VM 2) in the first node.

S403: The first device searches for the target flow entry in the hash table based on the policy information.

After receiving the target packet, the first device may obtain the target flow entry for the target packet from the hash table based on the policy information. The target flow entry is a flow entry that corresponds to the target operation and that is in a flow entry that matches the target packet. A manner of selecting the target operation is described in detail in the following, and is not described herein.

Corresponding to that the first device stores the flow entry in the hash table, to search for the target flow entry in the hash table, the first device first needs to determine a keyword (referred to as a target keyword) of the target flow entry. It can be learned from S402 that the target keyword of the target flow entry may be matching information of the target flow entry. In addition, it can be learned from step S401 that the matching information of the target flow entry may indicate the first characteristic information of the target packet. Therefore, optionally, the first device may obtain the target flow entry from the hash table based on the first characteristic information of the target packet. For example, the first device may obtain a plurality of fields of the target packet, perform the target operation on the plurality of fields, determine the first characteristic information (that is, the target keyword) of the target packet, calculate a hash value of the target keyword, and obtain data that is in a target storage location corresponding to the hash value in the hash table.

S404: The first device processes the target packet based on the target flow entry.

After the first device finds the target flow entry in the hash table, the first device may process the target packet based on the target flow entry. That the first device processes the target packet based on the target flow entry may mean that the first device processes the target packet based on instruction information in the target flow entry.

Refer to FIG. 4. The first device may forward the target packet to a target device based on the target flow entry. A forwarding action shown in FIG. 4 is merely used as an example rather than a limitation. For example, if the instruction information in the target flow entry indicates 0 actions, the target packet may be discarded by default. When the instruction information in the target flow entry indicates a plurality of actions, optionally, the plurality of actions may be performed in sequence according to a priority sequence.

In the method example corresponding to FIG. 4, the target field in the plurality of fields in the first characteristic information is shielded. Therefore, target packets of a plurality of network flows with different target fields may have same first characteristic information. Correspondingly, the target flow entry in the hash table may be for matching packets of the plurality of network flows. This helps reduce a quantity of flow entries in the hash table and save storage resources. In addition, the first characteristic information is related to the target operation. Configuring the policy information helps change the target operation corresponding to the target packet in the plurality of groups of operations, and further change the target flow entry obtained by the first device for the target packet from the hash table, thereby controlling an action used for processing the target packet.

In step S403, after receiving the target packet, the first device searches for the target flow entry in the hash table based on the policy information. Still refer to FIG. 4. Optionally, step S403 may include S4031 and S4032. In other words, the first device implements step S403 by performing steps S4031 and S4032.

S4031: The first device determines, based on the policy information, the target operation corresponding to the target packet.

After receiving the target packet, the first device may determine, based on the policy information, the target operation corresponding to the target packet in the plurality of groups of operations. In some examples, the policy information includes one or more items, and each item includes matching information and operation information. The matching information of each item is for identifying a packet that matches the corresponding item, and the operation information of each item indicates at least one group of operations in an operation set. Assuming that the one or more items include a target item, and matching information of the target item successfully matches the target packet, the first device may determine that an operation indicated by the operation information of the target item is the target operation.

Taking the target item as an example, the matching information of the target item successfully matches second characteristic information of the target packet. Optionally, the first device may determine the second characteristic information of the target packet based on the plurality of fields of the target packet, time information of receiving the target packet, and/or the like. The matching information of the item is not limited to matching the first characteristic information of the packet. This helps determine a processing policy for the packet based on other information of the packet, and helps improve flexibility of the processing policy of the packet.

Taking the target item as an example, the operation information in the target item indicates an address of at least one group of operations in the operation set or an identifier of the target operation in the operation set.

Optionally, when the first device finds, in the policy information, an item matching the target packet, the first device no longer continues to search for another item matching the target packet, or the first device continues to search for another item matching the target packet in the policy information. When the first device finds a plurality of groups of target operations, the first device may perform step S4042 based on all or some of the plurality of groups of target operations.

S4042: The first device searches for the target flow entry in the hash table based on the target operation.

After determining the target operation from the operation set, the first device may search for the target flow entry in the hash table based on the target operation. Step S4042 may be understood with reference to related content in step S403.

Still refer to FIG. 4. Optionally, before step S403, the data processing method corresponding to FIG. 4 may further include steps S405 to S407.

S405: The first device sends a first message to the second device.

The first device may send the first message to the second device. The first message is for requesting the second device to deliver the target flow entry. After receiving the first message, the second device may search for the target flow entry.

In some examples, after the first device determines, based on the policy information, the target operation corresponding to the target packet, if the first device cannot find the target flow entry in the hash table based on the target operation, the first device may send the first message to the second device. Optionally, the first message may carry the identifier of the target operation and information of the target packet. Optionally, the information of the target packet includes the target packet, the plurality of fields of the target packet, or the plurality of fields for which the target operation is performed. Alternatively, optionally, the first message may carry the first characteristic information of the target packet, and the first characteristic information includes the plurality of fields of the target packet for which the target operation is performed.

S406: The second device sends a second message to the first device.

After finding the target flow entry, the second device may send the second message to the first device. The second message carries the target flow entry.

If the first message does not carry the identifier of the target operation, the second message may carry all flow entries that match the target packet. If the first message carries the identifier of the target operation, the second message may carry the target flow entry for the target operation, and does not carry another flow entry. This helps reduce a transmission resource occupied by the second message.

S407: The first device stores the target flow entry in the hash table.

After receiving the second message, the first device may obtain the target flow entry carried in the second message, and store the target flow entry in the hash table. For a process in which the first device stores the target flow entry in the hash table, refer to related content in S401. Details are not described herein again.

To better implement the foregoing solutions of this application, the following further provides a related device configured to implement the foregoing solutions.

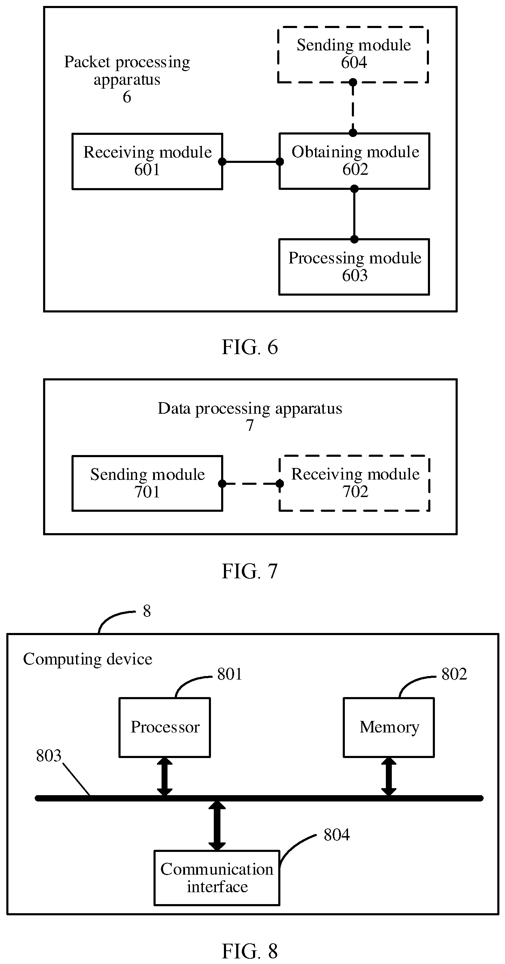

FIG. 6 is a diagram of a structure of a packet processing apparatus according to an embodiment of this application. The packet processing apparatus may be the first device shown in FIG. 1 or FIG. 4, or may be the network interface card or the OVS shown in FIG. 2. The packet processing apparatus may perform the method and the steps performed by the first device in the method embodiment shown in FIG. 4. As shown in FIG. 6, the packet processing apparatus 6 may include a receiving module 601, an obtaining module 602, and a processing module 603. The receiving module 601 is configured to receive a target packet. For a specific implementation, refer to related descriptions of step S402 in FIG. 4. Details are not described herein again. The obtaining module 602 is configured to obtain a target flow entry from a hash table based on policy information. For a specific implementation, refer to related descriptions of step S403 or S4031 and S4032 in FIG. 4. Details are not described herein again. The processing module 603 is configured to process the target packet based on the target flow entry. For a specific implementation, refer to related descriptions of step S404 in FIG. 4. Details are not described herein again.

Optionally, the receiving module 601 is further configured to receive the policy information and/or one or more flow entries. Optionally, the receiving module 601 is further configured to: receive the target flow entry from a second device, and store the target flow entry in the hash table. For a specific implementation, refer to related descriptions of steps S406 and S407 in FIG. 4. Details are not described herein again. Optionally, the packet processing apparatus may further include a sending module 604. The sending module 604 is configured to send a first message to the second device. For a specific implementation, refer to related descriptions of step S405 in FIG. 4. Details are not described herein again.

FIG. 7 is a diagram of a structure of a data processing apparatus according to an embodiment of this application. The data processing apparatus may be the second device shown in FIG. 1, or may be the OVS shown in FIG. 2 or the controller (not shown in FIG. 2) in the system architecture shown in FIG. 2. The data processing apparatus may perform the method and the steps performed by the second device in the method embodiment shown in FIG. 4. As shown in FIG. 7, the data processing apparatus 7 may include a sending module 701. The sending module 701 is configured to send policy information and/or one or more flow entries to a first device. For a specific implementation, refer to related descriptions of step S401 in FIG. 4. Details are not described herein again. Optionally, the data processing apparatus may further include a receiving module 702. The receiving module 702 is configured to receive a first message sent by the first device. For a specific implementation, refer to related descriptions of step S405 in FIG. 4. Details are not described herein again. Optionally, the sending module 701 is further configured to send a second message to the first device. For a specific implementation, refer to related descriptions of step S406 in FIG. 4. Details are not described herein again.

FIG. 8 is a diagram of a structure of a computer device according to an embodiment of this application. The computer device may be the first device or the second device shown in FIG. 1, or may be the first device or the second device shown in FIG. 4, or may be the node 1 shown in FIG. 2, or may be the network interface card shown in FIG. 2. As shown in FIG. 8, the computer device 8 includes a processor 801 and a memory 802. The processor 801 and the memory 802 are interconnected. Optionally, the processor 801 and the memory 802 may be interconnected through an internal bus 803.

The processor 801 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 802 may include a volatile memory (volatile memory), for example, a random access memory (random access memory, RAM). The memory 802 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 802 may further include a combination of the foregoing types.

The bus 803 may be a peripheral component interconnect (peripheral component interconnect, PCI) bus, an extended industry standard architecture (extended industry standard architecture, EISA) bus, or the like.

Optionally, the computer device 8 may include a communication interface 804, and the processor 801 is connected to the communication interface 802. For example, as shown in FIG. 8, the processor 801 is connected to the communication interface 802 through a bus.

The memory 802 stores computer instructions. By executing the computer instructions, the processor 801 may perform the method process performed by the first device or the second device in the method shown in FIG. 4. For a specific implementation, refer to the foregoing corresponding content. Details are not described herein again.

This application further provides a communication system. The communication system may include, for example, the packet processing apparatus shown in FIG. 6 and the data processing apparatus shown in FIG. 7. Alternatively, the communication system includes at least the first device and the second device shown in FIG. 1 or FIG. 4. Optionally, the communication system may further include a communication link between the first device and the second device. Optionally, the communication system may further include the source device and/or the target device shown in FIG. 1 or FIG. 4. Alternatively, optionally, the communication system includes at least the first node shown in FIG. 2, and optionally, may further include the second node and/or the physical switch. Optionally, the communication system may be the system architecture corresponding to FIG. 1 or FIG. 2.

The data processing method provided in embodiments of this application may be specifically performed by a chip in the computer device. The chip includes a processing unit and a communication unit. The processing unit may be, for example, a processor, and the communication unit may be, for example, an input/output interface, a pin, or a circuit. The processing unit may execute computer executable instructions stored in a storage unit, so that the chip in the computing device performs the foregoing method example. Optionally, the storage unit is a storage unit in the chip, for example, a register or a cache. Alternatively, the storage unit may be a storage unit that is outside the chip and that is in a wireless access device, for example, a read-only memory (read-only memory, ROM), another type of static storage device that can store static information and instructions, or a random access memory (random access memory, RAM).

This application further provides a computer-readable storage medium. The computer-readable storage medium stores a computer program. When the computer program is executed by a processor, some or all of the steps recorded in any one of the foregoing method embodiments may be implemented. The computer-readable storage medium may be any available medium accessible to a general-purpose or dedicated computer. An embodiment of this application further provides a computer program. The computer program includes instructions, and when the computer program is executed by a computer, the computer is enabled to perform some or all of the steps in any one of the method embodiments. A person of ordinary skill in the art may understand that the computer-readable storage medium includes any non-transitory (non-transitory) machine-readable medium that can store program code, for example, a USB flash drive, a removable hard disk, a magnetic disk, an optical disc, a RAM, an SSD, or a non-volatile memory (non-volatile memory).

It may be clearly understood by a person skilled in the art that, for the purpose of convenient and brief description, for a detailed working process of the foregoing system, apparatus, and unit, refer to a corresponding process in the foregoing method embodiments, and details are not described herein again. In the foregoing embodiments, the description of each embodiment has respective focuses. For a part that is not described in detail in an embodiment, refer to related descriptions in other embodiments. It should be noted that, for brief description, the foregoing method embodiments are represented as a series of action combinations. However, a person skilled in the art should understand that this application is not limited to the described action sequence, because some steps may be performed in other sequences or simultaneously according to this application. It should be further appreciated by a person skilled in the art that embodiments described in this specification all belong to example embodiments, and the involved actions and modules are not necessarily required by this application. "A and/or B" in embodiments of this application may be understood as including two solutions: "A and B" and "A or B."

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units are integrated into one unit. The integrated unit may be implemented in a form of hardware, or may be implemented in a form of a software functional unit. Finally, it should be noted that the foregoing embodiments are merely intended for describing the technical solutions of this application, but not for limiting this application.

## Claims

1. A data processing method, comprising:
receiving, by a first device, a target packet;
obtaining, by the first device, a target flow entry from a hash table based on policy information, wherein the policy information indicates a target operation corresponding to the target packet in a plurality of groups of operations, the target operation is for shielding a target field in a plurality of fields of the target packet, the plurality of fields are for identifying a network flow to which the target packet belongs, the hash table stores one or more flow entries, the target flow entry matches first characteristic information of the target packet, and the first characteristic information comprises the plurality of fields for which the target operation is performed; and
processing, by the first device, the target packet based on the target flow entry.

2. The method according to claim 1, wherein the policy information comprises one or more items, a target item in the one or more items comprises target matching information and a target matching result, the target matching information is for matching the target packet, and the target matching result indicates the target operation.

3. The method according to claim 2, wherein the target matching information matches second characteristic information of the target packet, and the second characteristic information is determined based on the plurality of fields and/or time information of receiving the target packet.

4. The method according to any one of claims 1 to 3, wherein the first characteristic information further comprises an identifier of the target operation.

5. The method according to any one of claims 1 to 4, wherein before the obtaining, by the first device, a target flow entry from a hash table based on policy information, the method further comprises:
sending, by the first device, a first message to a second device, wherein the first message is for requesting the second device to deliver the target flow entry;
receiving, by the first device, a second message sent by the second device, wherein the second message carries the target flow entry; and
storing, by the first device, the target flow entry in the hash table.

6. The method according to any one of claims 1 to 5, wherein a value of the target field in the plurality of fields for which the target operation is performed is set to a target value.

7. The method according to any one of claims 1 to 6, wherein the plurality of fields for which the target operation is performed do not comprise the target field.

8. A data processing method, comprising:
sending, by a second device, policy information to a first device, wherein the policy information indicates the first device to search for a target flow entry in a hash table after the first device receives a target packet, the hash table stores one or more flow entries, the target flow entry matches first characteristic information of the target packet, the first characteristic information comprises a plurality of fields for which a target operation is performed, the plurality of fields are for identifying a network flow to which the target packet belongs, the target operation is an operation that corresponds to the target packet in a plurality of groups of operations and that is indicated by the policy information, and the target operation is for shielding a target field in the plurality of fields of the target packet.

9. A data processing method, comprising:
sending, by a second device, policy information to a first device, wherein the policy information indicates a target operation corresponding to a target packet in a plurality of groups of operations, the target operation is for shielding a target field in a plurality of fields of the target packet, and the plurality of fields are for identifying a network flow to which the target packet belongs;
after receiving the target packet, searching, by the first device, for a target flow entry in a hash table based on the policy information, wherein the hash table stores one or more flow entries, the target flow entry matches first characteristic information of the target packet, and the first characteristic information comprises the plurality of fields for which the target operation is performed; and
processing, by the first device, the target packet based on the target flow entry.

10. A packet processing apparatus, comprising:
a receiving module, configured to receive a target packet;
an obtaining module, configured to obtain a target flow entry from a hash table based on policy information, wherein the policy information indicates a target operation corresponding to the target packet in a plurality of groups of operations, the target operation is for shielding a target field in a plurality of fields of the target packet, the plurality of fields are for identifying a network flow to which the target packet belongs, the hash table stores one or more flow entries, the target flow entry matches first characteristic information of the target packet, and the first characteristic information comprises the plurality of fields for which the target operation is performed; and
a processing module, configured to process the target packet based on the target flow entry.

11. A data processing apparatus, comprising:
a sending module, configured to send policy information to a first device, wherein the policy information indicates the first device to search for a target flow entry in a hash table after the first device receives a target packet, the hash table stores one or more flow entries, the target flow entry matches first characteristic information of the target packet, the first characteristic information comprises a plurality of fields for which a target operation is performed, the plurality of fields are for identifying a network flow to which the target packet belongs, the target operation is an operation that corresponds to the target packet in a plurality of groups of operations and that is indicated by the policy information, and the target operation is for shielding a target field in the plurality of fields of the target packet.

12. A computer device, comprising a processor and a memory, wherein
the processor is configured to execute instructions stored in the memory, to enable the computing device to perform the method according to any one of claims 1 to 8.

13. A communication system, comprising a communication link, the packet processing apparatus according to claim 10, and the data processing apparatus according to claim 11, wherein the communication link is for transmitting information between the packet processing apparatus and the data processing apparatus.

14. A computer-readable storage medium, comprising instructions, wherein when the instructions are run on a computer device, the computer device is enabled to perform the method according to any one of claims 1 to 8.
